# EUROPÄISCHE PATENTSCHRIFT

(11) **EP 3 441 292 B1**
(45) Veröffentlichungstag und Bekanntmachung des Hinweises auf die Patenterteilung: **17.01.2024**
(21) Anmeldenummer: 18187248.2
(22) Anmeldetag: 03.08.2018
(51) Int. Cl.: B62J 1/08

(54) **FAHRRADKOMPONENTE**
BICYCLE COMPONENT
COMPOSANTS DE BICYCLETTE

(30) Priorität: 11.08.2017 DE 102017118417
(43) Veröffentlichungstag der Anmeldung: 13.02.2019
(73) Patentinhaber: DT Swiss AG, 2504 Biel (CH)
(72) Erfinder: Andrea, Chiesa, 6949 Comano (CH)
(74) Vertreter: BSB Patentanwälte Schütte & Engelen Partnerschaft mbB

(56) Entgegenhaltungen:
- WO-A1-2017/011848
- CN-Y- 2 173 745
- DE-A1-102007 063 365
- ES-U- 1 185 933
- US-A1- 2014 061 419

## Beschreibung

Die vorliegende Erfindung betrifft eine Fahrradkomponente für ein wenigstens teilweise mit Muskelkraft betriebenes Fahrrad mit einer zwischen wenigstens zwei Stellungen teleskopartig verstellbaren Sattelstützeinrichtung zum Anpassen einer Sattelhöhe.

Für eine sichere Beherrschung eines Fahrrads und für eine günstige Kraftübertragung ist es wichtig, dass die Sattelhöhe optimal eingestellt ist. Das gilt sowohl für Alltags- bzw. Cityräder als auch für Sportfahrräder. Oft ist es hilfreich, die Sattelhöhe an die unterschiedlichen Fahrsituationen einfach und zügig anpassen zu können.

Beispielsweise muss bei Bergabfahrten der Sattel entsprechend tief stehen, damit der Fahrer sein Gewicht hinter den Sattel bringen kann, um den Schwerpunkt nach hinten zu verlagern. Beim Fahren in der Sitzposition muss die Sattelhöhe ergonomisch eingestellt sein, um einen günstigen Krafteintrag in den Antrieb zu ermöglichen.

Daher werden Fahrräder immer häufiger mit verstellbaren Sattelstützen ausgestattet, welche auch als Teleskopstützen bezeichnet werden. Bei solchen Teleskopstützen werden zwei teleskopierende Rohre eingesetzt, wobei das dickere Rohr unten in den Rahmen eingesetzt wird und das dünnere Rohr nach oben aus dem dickeren Rohr heraussteht. Dadurch kann ein sehr großer Verstellbereich zur Verfügung gestellt werden, da das innere Rohr nahezu beliebig tief in den Fahrradrahmen eintauchen kann. Zur Verstellung kann der Fahrer den Verstellmechanismus der Sattelstütze in der Regel vom Lenker aus bedienen. So kann eine Anpassung der Sattelhöhe während der Fahrt erfolgen, ohne dass der Fahrer absteigen muss. Eine gattungsgemäße Fahrradkomponente mit einer solchen Sattelstütze ist aus der US 2014/061419 A1 bekannt.

Hydraulische Sattelstützen erlauben eine Verstellung in unterschiedlichste Höhenpositionen. Ein Nachteil daran ist aber, dass diese schwierig zu demontieren und zu säubern und zu warten sind. Für die Demontage ist Spezialwerkzeug nötig. Außerdem kann Hydraulikfluid austreten, wenn die Demontage nicht fachgerecht erfolgt.

Die bekannten verstellbaren Sattelstützen funktionieren in der Regel zufriedenstellend, bieten jedoch auch Verbesserungspotenzial. Insbesondere können die bekannten Lösungen hinsichtlich ihrer Praxistauglichkeit und ihres Gewichts sowie ihrer Herstellungskosten und insbesondere des Wartungsaufwandes optimiert werden.

Es ist daher die Aufgabe der vorliegenden Erfindung, eine verbesserte Fahrradkomponente mit einer verstellbaren Sattelstützeinrichtung zur Verfügung zu stellen. Insbesondere soll eine verstellbare Sattelstütze zur Verfügung gestellt werden, welche zuverlässig ist und unkompliziert funktioniert und wirtschaftlich herstellbar ist und insbesondere einfach zu warten ist.

Diese Aufgabe wird gelöst durch eine Fahrradkomponente mit den Merkmalen des Anspruchs 1 sowie durch ein Fahrrad gemäß Anspruch 15. Bevorzugte Weiterbildungen sind Gegenstand der Unteransprüche. Weitere Vorteile und Merkmale der vorliegenden Erfindung ergeben sich aus der allgemeinen Beschreibung und der Beschreibung der Ausführungsbeispiele.

Die erfindungsgemäße Fahrradkomponente ist für ein wenigstens teilweise mit Muskelkraft betriebenes Fahrrad vorgesehen. Die Fahrradkomponente umfasst eine zwischen wenigstens zwei Stellungen teleskopartig verstellbare Sattelstützeinrichtung zum Anpassen einer Sattelhöhe. Die Fahrradkomponente umfasst wenigstens eine Verriegelungseinrichtung zum Arretieren der Sattelstützeinrichtung in wenigstens einer der Stellungen. Die Sattelstützeinrichtung umfasst wenigstens zwei relativ zueinander bewegbare Stützelemente, nämlich en erstes Stützelement und wenigstens ein zweites Stützelement. Das erste Stützelement ist an einer Rahmenstruktur des Fahrrad; fest befestigbar.

Das zweite Stützelement dient zur Aufnahme eines Sattels. Dabei ist das erste Stützelement wenigstens abschnittsweise innerhalb des zweiten Stützelements angeordnet. Zum Teleskopieren der Sattelstützeinrichtung ist das zweite Stützelement wenigstens abschnittsweise über das erste Stützelement bewegbar. Eine solche "upside-down"-Ausgestaltung ermöglicht einen sehr einfachen Aufbau. Dabei ist das zweite Stützelement einwandig ausgebildet. Dabei ist die Verriegelungseinrichtung wenigstens teilweise innerhalb des ersten Stützelements angeordnet und umfasst wenigstens ein Riegelelement, welches sich im arretierten Zustand durch wenigstens eine Wandung des ersten Stützelements hindurch in das zweite Stützelement erstreckt. Besonders bevorzugt gleitet das zweite Stützelement bei einer Höhenverstellung (eines Sattels) auf dem ersten Stützelement und/oder wird durch das erste Stützelement geführt.

Die erfindungsgemäße Fahrradkomponente bietet viele Vorteile. Einen erheblichen Vorteil bietet die erfindungsgemäße Anordnung der beiden Stützelemente. Dadurch kann das zweite bzw. obere Stützelement konstruktiv unabhängig von der Rahmenstruktur und insbesondere vom Sattelrohrdurchmesser ausgelegt werden. Dadurch ergeben sich wesentliche höhere Freiheitsgrade für die Konstruktion und erheblich flexiblere Ausgestaltungsmöglichkeiten, um eine zuverlässige und kostenoptimierte Sattelstützeinrichtung zu erhalten. Besonders vorteilhaft ist zudem, dass die erfindungsgemäße Fahrradkomponente dadurch besonders gut auch bei anderen Arten von Fährrädern als Mountainbikes eingesetzt werden kann, z. B. bei Rennrädern, Cyclo-Cross-Rädern und Trekkingrädern und E-Bikes.

Zum Beispiel sind mit der Erfindung erheblich größere Durchmesser für das zweite bzw. obere Stützelement möglich. Dadurch ergibt sich auch eine freiere Werkstoffwahl der Stützelemente. Die erfindungsgemäße Fahrradkomponente ermöglicht daher auch eine vorteilhafte Gewichtsreduzierung, was besonders bei Sporträdern von Vorteil ist. Ein weiterer Vorteil ist, dass sich höhere Freiheitsgrade für die Montage des Sattels an dem zweiten Stützelement ergeben. Bisher konnte der obere Teil von teleskopierbaren Sattelstützen nur in sehr engen Grenzen konstruiert werden, da dieser einen besonders geringen Durchmesser aufweisen musste, um beim Einfahren des Sattels in das untere Teil zu passen. Dabei konnte der untere Teil auch nicht einfach vergrößert werden, da dieser wiederum in das Sattelrohr des Rahmens passen muss.

In allen Ausgestaltungen ist es bevorzugt, dass das erste Stützelement aus einem leichten Material besteht. Es ist möglich, dass das erste und/oder das zweite Stützelement wenigstens zum Teil oder auch vollständig aus einem faserverstärkten Material wie einem Carbonmaterial besteht. Besonders bevorzugt besteht das erste Stützelement wenigstens teilweise und insbesondere wenigstens zu einem erheblichen Teil oder im Wesentlichen vollständig oder vollständig aus (wenigstens) einem Faserverbundmaterial.

Auch für das erste bzw. untere Stützelement werden flexiblere Konstruktionsbedingungen ermöglicht. Zum Beispiel kann die Wandstärke des ersten Stützelements unabhängig von den Abmessungen des oberen Stützelements ausgelegt werden. So kann das erste bzw. untere Stützelement beispielsweise in optimaler Leichtbauweise ausgeführt werden. Bislang musste der untere Teil von teleskopierbaren Sattelstützen so dünnwandig ausgeführt werden, dass der obere Teil eintauchen konnte, damit ein Teleskopieren möglich ist. Das untere Stützelement kann z. b. so groß ausgeführt werden, dass es passgenau in das Sattelrohr einsetzbar ist. Dadurch ergibt sich eine insgesamt erheblich steifere und belastbare und zugleich gewichtsoptimierte Sattelstützeinrichtung.

Ein weiterer Vorteil ist, dass durch die erfindungsgemäße Anordnung der beiden Stützelemente die Sattelstützeinrichtung erheblich unempfindlicher gegen Verschmutzungen ist und somit eine besonders zuverlässige Funktion bietet. Dadurch, dass das obere Stützelement über das untere Stützelement bewegbar ist, kann Schmutz wesentlich leichter abgestreift werden und einfach nach unten fallen. Schmutz und Feuchtigkeit sammelt sich insbesondere nicht oben direkt auf der Verbindungsstelle der beiden Stützelemente, sondern wird davon nach unten abgestreift.

Im Rahmen der vorliegenden Erfindung wird unter dem Begriff Teleskopieren insbesondere ein relatives Ineinanderschieben der Stützelemente verstanden. Zum Teleskopieren der Sattelstützeinrichtung, vorzugsweise zum Verringern der Sattelhöhe, ist insbesondere das zweite Stützelement wenigstens abschnittsweise über das ersteStützelement schiebbar. Zum Teleskopieren der Sattelstützeinrichtung, vorzugsweise zum Vergrößern der Sattelhöhe, wird insbesondere das zweite Stützelement wenigstens abschnittsweise auf dem ersten Stützelement nach oben bewegt. Insbesondere teleskopiert das erste Stützelement in das zweite Stützelement bzw. das zweite Stützelement bewegt sich auf dem ersten Stützelement.

Die Fahrradkomponente kann in einfachen Ausgestaltungen als Sattelstütze ausgebildet sein.

Vorzugsweise sind rohrartige Stützelemente vorgesehen. Vorzugsweise sind die Stützelemente wenigstens teilweise hohl ausgebildet.

Bei einer betriebsgemäßen Verwendung der Sattelstützeinrichtung ist das zweite Stützelement insbesondere oben und das erste Stützelement insbesondere unten angeordnet. Dabei ist das erste Stützelement insbesondere wenigstens abschnittsweise in einem Sattelrohr einer Rahmenstruktur eines Fahrrads aufgenommen. Die Rahmenstruktur kann Teil der Fahrradkomponente sein. Die Fahrradkomponente kann auch ein Fahrrad umfassen oder als ein solches ausgebildet sein.

Vorzugsweise sind wenigstens eine Außenkontur des ersten Stützelements und wenigstens eine Innenkontur des zweiten Stützelements, d.h. die Buchsen des jeweiligen Stützelementes, wenigstens abschnittsweise passgenau zueinander ausgebildet, sodass das zweite Stützelement entlang des ersten Stützelements geführt ist. Das bietet ein leichtgängiges und robustes Ein- und Ausfahren der Sattelstützeinrichtung. Insbesondere sind die Außenkontur und die Innenkontur dort passgenau zueinander ausgebildet, wo die beiden Stützelemente aneinander entlang gleiten bzw. teleskopieren. Insbesondere ist das erste Stützelement in dem zweiten Stützelement geführt bzw. es wird das zweite Stützelement außen auf dem ersten Stützelement geführt. Das erste Stützelement kann ein fester Bestandteil der Rahmenstruktur des Fahrrads oder des Fahrradrahmens sein und kann fest damit verbunden oder einstückig damit gearbeitet sein.

Es ist möglich, dass zwischen den beiden Stützelementen wenigstens eine Verdrehsicherung angeordnet ist. Dadurch wird verhindert, dass sich der Sattel im Betrieb und auch beim Absenken bzw. Auseinanderfahren der Sattelstützeinrichtung verdreht. Die Verdrehsicherung wird insbesondere durch die Außenkontur des ersten Stützelements und die Innenkontur des zweiten Stützelements bereitgestellt.

Die Verdrehsicherung kann auch wenigstens eine Linearführung mit wenigstens einer Führungsschiene umfassen. Die Führungsschiene ist beispielsweise in eine Vertiefung im ersten oder zweiten Stützelement eingelassen. Die Verdrehsicherung kann auch wenigstens eine Verzahnung aufweisen. Möglich ist auch eine anders ausgestaltete Verdrehsicherung. Besonders bevorzugt ermöglicht die Verdrehsicherung eine leichtgängige Verstellung. Insbesondere ist die Verdrehsicherung im Wesentlichen spielfrei oder (praktisch) spielfrei ausgestaltet.

Insbesondere sind die Stützelemente zylindrisch ausgebildet. Insbesondere ist ein Außendurchmesser des ersten Stützelements kleiner als ein Innendurchmesser des zweiten Stützelements. Die Stützelemente können auch wenigstens abschnittsweise unrund ausgebildet sein.

Die Verriegelungseinrichtung ist vorzugsweise wenigstens teilweise innerhalb eines der Stützelemente und insbesondere innerhalb des ersten Stützelements angeordnet. Das bietet eine besonders kompakte Sattelstützeinrichtung und eine wartungsarme Unterbringung. Beispielsweise ist in dem ersten Stützelement wenigstens ein Aufnahmeraum angeordnet, in welchem die Verriegelungseinrichtung wenigstens teilweise angeordnet ist. Insbesondere ist die Verriegelungseinrichtung in einem derartigen Umfang in dem ersten Stützelement angeordnet, dass nur das wenigstens eine Riegelelement nicht innerhalb des ersten Stützelements bzw. außerhalb des ersten Stützelements angeordnet ist. Die Verriegelungseinrichtung kann auch wenigstens teilweise in dem zweiten Stützelement angeordnet sein.

Die Verriegelungseinrichtung umfasst bevorzugt wenigstens ein Riegelelement. Das Riegelelement erstreckt sich im arretierten Zustand insbesondere durch wenigstens eine Wandung des ersten Stützelements hindurch in das zweite Stützelement. Das bietet eine konstruktiv unaufwändige und zugleich sehr zuverlässige Verriegelung und ermöglicht eine spielfreie Realisierung. Insbesondere erstreckt sich das Riegelelement im arretierten Zustand in wenigstens eine Wandung des zweiten Stützelements. Zum Durchführen des Riegelelements kann das erste Stützelement wenigstens eine Durchgangsöffnung umfassen. Beispielsweise ist in der Wandung wenigstens eine Bohrung angeordnet. Insbesondere ist eine Mehrzahl von Riegelelementen vorgesehen. Die Verriegelungseinrichtung ist insbesondere dazu geeignet und ausgebildet, eine relative Bewegbarkeit der Stützelemente zueinander mittels des Riegelelements formschlüssig zu blockieren.

Im arretierten Zustand erstreckt sich das Riegelelement insbesondere nur in einen Teil einer Wandung des zweiten Stützelements. Das hat den Vorteil, dass eine geschlossene Außenhülle bereitgestellt wird, durch welche kein Schmutz eindringen kann. Insbesondere umfasst das zweite Stützelement wenigstens eine Ausnehmung in der Wandung, in welcher das Riegelelement im arretierten Zustand angeordnet ist. Die Ausnehmung ist beispielsweise als eine Vertiefung bzw. Senke ausgebildet. Möglich ist aber auch, dass das Riegelelement im arretierten Zustand durch die Wandung des zweiten Stützelements hindurchtritt.

Die Verriegelungseinrichtung ist insbesondere dazu geeignet und ausgebildet, das Riegelelement mittels wenigstens eines Kolbenelements wenigstens teilweise in wenigstens eine Ausnehmung des zweiten Stützelements zu drücken. So wird ein zuverlässiges Positionieren der Riegelelemente erreicht. Insbesondere liegt eine arretierte Stellung vor, wenn das Kolbenelement das Riegelelement in das zweite Stützelement drückt. Insbesondere drückt das Kolbenelement das Riegelelement in die Ausnehmung des zweiten Stützelements. Insbesondere umfasst die Verriegelungseinrichtung wenigstens ein Kolbenelement. Die Ausnehmung ist insbesondere in der Wandung des zweiten Stützelements angeordnet.

Das Kolbenelement ist insbesondere in Richtung einer Längsachse der Stützelemente bewegbar. Insbesondere drückt das Kolbenelement das Riegelelement quer zur Längsachse des Stützelementes. Insbesondere umfasst das Kolbenelement wenigstens eine Keilfläche, mit der eine Längsbewegung des Kolbenelements in eine Querbewegung des Riegelelements umsetzbar ist. Beispielsweise ist das Kolbenelement stabförmig und/oder zylindrisch ausgebildet. Bei einer wenigstens abschnittsweise zylindrischen Ausgestaltung des Kolbenelements ist vorzugsweise die Keilfläche an einem Konus ausgebildet und ist konusförmig gestaltet. Möglich ist auch, dass das Kolbenelement ringförmig und/oder als eine Buchse ausgebildet ist. Insbesondere ist das Keilelement an einen Innendurchmesser und/oder eine Innenkontur des ersten Stützelements angepasst. Insbesondere ist das Kolbenelement in dem ersten Stützelement geführt und vorzugsweise linear geführt.

Das Riegelelement bzw. die Riegelelemente ist bzw. sind vorzugsweise lose eingelegt und werden insbesondere nicht geführt.

Das Kolbenelement ist vorzugsweise in Richtung einer Längsachse des ersten Stützelements in wenigstens eine Lösestellung bewegbar. Vorzugsweise drückt das Kolbenelement in der Lösestellung das Riegelelement nicht in das zweite Stützelement. Das bietet eine Verriegelung, welche unaufwendig ist und zuverlässig funktioniert. Insbesondere weist das Kolbenelement wenigstens eine Aussparung auf, in welcher das Riegelelement in der Lösestellung aufnehmbar ist. Insbesondere ist das Riegelelement in der Lösestellung nicht mehr in (der Wandung von) dem zweiten Stützelement angeordnet.

Die Fahrradkomponente umfasst insbesondere wenigstens eine Betätigungseinrichtung zum Lösen und/oder Aktivieren der Arretierung. Dabei ist die Betätigungseinrichtung insbesondere dazu geeignet und ausgebildet, das Kolbenelement in die Lösestellung und/oder in die arretierte Stellung zu bewegen. Die Betätigungseinrichtung kann wenigstens teilweise manuell oder auch vollständig manuell betätigbar sein. Möglich ist auch eine motorisch unterstützte und/oder vollautomatische Betätigung und/oder eine kabellose Betätigung und Funktionsweise. In bevorzugten Ausgestaltungen wird eine mechanische Lösung realisiert, auch wenn es sich vorbehalten wird, elektrische und/oder ferngesteuerte und/oder kabellose Steuerungsmöglichkeiten zu realisieren, wenn diese technisch möglich und rechtlich zulässig sind.

Besonders bevorzugt ist das Kolbenelement zum Einnehmen der Lösestellung in Richtung eines von dem zweiten Stützelement abgewandten Endes des ersten Stützelements bzw. eines in der Rahmenstruktur aufnehmbaren Endes des ersten Stützelements bewegbar. Insbesondere ist das Kolbenelement zum Einnehmen der Lösestellung in Richtung eines von dem zweiten Stützelement abgewandten Endes des ersten Stützelements durch ein Ziehen und vorzugsweise durch wenigstens eine Seilzugeinrichtung bewegbar. Das ermöglicht eine besonders Bauraum sparende Unterbringung der Betätigungseinrichtung. Für das Einnehmen der Lösestellung ist das Keilelement insbesondere in Richtung desjenigen Endes des ersten Stützelements bewegbar, welches dem mit dem zweiten Stützelement verbundenen Ende des ersten Stützelements gegenüberliegt. Das Keilelement ist insbesondere aus der arretierten Stellung in die Lösestellung überführbar, indem es zu dem Ende des ersten Stützelements bewegt wird, welches in der Rahmenstruktur aufnehmbar ist.

Das Kolbenelement ist besonders bevorzugt dazu geeignet und ausgebildet, mittels wenigstens einer Betätigungseinrichtung in die Lösestellung gezogen zu werden. Eine solches Ziehen kann besonders unaufwendig und robust umgesetzt werden.

Insbesondere wird das Kolbenelement mit der Betätigungseinrichtung zu einem Ende des ersten Stützelements gezogen, welches in der Rahmenstruktur aufnehmbar ist bzw. welches von dem zweiten Stützelement abgewandt ist. Möglich ist auch, dass das Kolbenelement mittels der Betätigungseinrichtung in die Lösestellung drückbar ist.

In allen Ausgestaltungen ist es bevorzugt, dass die Fahrradkomponente wenigstens eine Betätigungseinrichtung zum Lösen und/oder Aktivieren der Verriegelungseinrichtung umfasst. Die Betätigungseinrichtung ist dabei insbesondere die zuvor beschriebene Betätigungseinrichtung, mittels der das Kolbenelement in die Lösestellung gezogen wird. Vorzugsweise ist die Betätigungseinrichtung wenigstens teilweise mechanisch ausgebildet. Die Betätigungseinrichtung kann vollständig mechanisch ausgebildet sein.

Vorzugsweise umfasst die Betätigungseinrichtung wenigstens eine Seilzugeinrichtung mit wenigstens einem Seilzug. Die Betätigungseinrichtung kann wenigstens einen mechanischen Bedienhebel umfassen, mit welcher der Seilzug in wenigstens eine Stellung bzw. wenigstens eine der beiden Stellungen (gelöst/arretiert) überführt werden kann. Eine Seilzugeinrichtung bietet viele Vorteile und ist beispielsweise besonders wartungsarm und betriebssicher. Insbesondere ist die Betätigungseinrichtung dazu geeignet und ausgebildet, das Kolbenelement mittels der Seilzugeinrichtung zu ziehen. Der Seilzug verläuft insbesondere innerhalb des ersten Stützelements. Insbesondere verläuft der Seilzug auch innerhalb der Rahmenstruktur und insbesondere eines Sattelrohrs des Fahrrads.

Es hat sich herausgestellt, dass der Seilzug in Stellungen, wenn das Kolbenelement nicht arretiert ist, nicht genau definiert positioniert oder gehalten wird. Dann kann die Betätigungseinrichtung leichtgängig in wenigstens eine Richtung bewegt werden, ohne dass der Benutzer ein haptisches Feedback erhält. Der Benutzer kann dann den Anschein erhalten, dass die Sattelstützeinrichtung nicht definiert arbeitet und gegebenenfalls kann das Vertrauen des Benutzers in die Zuverlässigkeit beeinträchtigt werden. Auch um z. B. einen solchen Eindruck zu vermeiden, kann der Seilzug mit einem Seilstraffer gekoppelt sein, um jederzeit ein definiertes haptisches Feedback für den Benutzer bereitzustellen. Durch den Seilstraffer wird ein ansonsten möglicherweise auftretendes Spiel vermieden.

Der Seilzug ist vorzugsweise über wenigstens einen Seilstraffer insbesondere mit dem Kolbenelement gekoppelt. Der Seilstraffer umfasst vorzugsweise wenigstens eine Vorspanneinheit, die zu einer Straffung des Seils führt. Die Vorspanneinheit kann als mechanische Feder ausgeführt sein, kann aber auch z.B. auf magnetischer Basis ausgeführt sein. Die Vorspanneinheit ist vorzugsweise an einem Gleitelement angeordnet, an welchem das bzw. ein Ende des Seilzuges gehalten wird. Das Gleitelement wird über die Vorspanneinheit in einen vorgespannten Zustand gedrückt.

Eine Vorspannkraft der Vorspanneinheit ist einer Vorspannung der Vorspanneinrichtung entgegengesetzt. Die Höhe der Vorspannkraft der Vorspanneinheit ist aber vorzugsweise erheblich geringer als eine Höhe der Vorspannkraft der Vorspanneinrichtung, sodass immer eine effektive Kraft der Vorspanneinrichtung wirkt. Vorzugsweise ist die Vorspannkraft der Vorspanneinheit kleiner als halb so groß beträgt insbesondere weniger als ein Viertel oder Achtel der Vorspannkraft der Vorspanneinrichtung.

Die Vorspanneinheit bewirkt, dass in jedem Zustand der Betätigungseinrichtung bzw. in jeder Position des (mechanischen) Bedienhebels eine Kraft zur Spannung des Seilzugs anliegt. Der Benutzer bekommt jederzeit das Feedback einer genau definierten Funktionsweise.

Möglich ist auch, dass die Betätigungseinrichtung wenigstens teilweise hydraulisch ausgebildet ist.

Die Betätigungseinrichtung umfasst vorzugsweise wenigstens ein Bedienteil zum Ziehen bzw. Spannen des Seilzugs. Das Bedienteil ist insbesondere an einer Lenkereinrichtung des Fahrers montierbar. Das Bedienteil ist insbesondere auch zum Betätigen und/oder Spannen und/oder Entspannen des Seilzugs ausgebildet. Das Bedienteil kann dazu geeignet und ausgebildet sein, den Seilzug festzustellen, beispielsweise in der Lösestellung und/oder der arretierten Stellung. Der Seilzug kann in eine der beiden Stellungen z. B. durch eine Feder vorbelastet sein.

Es ist besonders bevorzugt, dass der Seilzug aus einer axialen Stirnseite des ersten Stützelements austritt. Das ermöglicht eine gut geschützte und unaufwendig zu montierende Verlegung des Seilzugs beispielsweise innerhalb der Rahmenstruktur des Fahrrads. Insbesondere tritt der Seilzug an einem Ende des ersten Stützelements aus, welches in der Rahmenstruktur aufnehmbar ist bzw. von dem zweiten Stützelement abgewandt ist. Insbesondere tritt der Seilzug an einem Ende des ersten Stützelements aus, welches in einer betriebsgemäßen Position nach unten bzw. zum Boden gerichtet ist. Insbesondere ist die Seilzugeinrichtung dazu geeignet und ausgebildet, dass der Seilzug innerhalb einer Rahmenstruktur eines Fahrrads und insbesondere wenigstens innerhalb eines Sattelrohrs verlegbar ist. Möglich ist auch, dass der Seilzug an einer radialen Seite des ersten Stützelements austritt.

Die Fahrradkomponente umfasst insbesondere wenigstens eine Vorbelastungseinrichtung oder eine Vorspanneinrichtung, welche durch ein Ziehen des Kolbenelements in die Lösestellung vorspannbar ist. Die Vorspanneinrichtung insbesondere dazu geeignet und ausgebildet, das Kolbenelement aus der Lösestellung in die arretierte Stellung zu überführen, wenn der Seilzug entspannt wird. Das bietet eine kostengünstig umsetzbare und verlässliche Rückstellung der Verriegelungseinrichtung. Dadurch kann zuverlässig gewährleistet werden, dass der Sattel nach dem Einstellen in der gewünschten Position verbleibt.

Die Vorspanneinrichtung umfasst insbesondere wenigstens einen Kraftspeicher und beispielsweise wenigstens eine Feder und/oder Gasfeder. Insbesondere ist das Kolbenelement entgegen einer Vorspannkraft der Vorspanneinrichtung in die Lösestellung bewegbar.

Insbesondere ist die Betätigungseinrichtung dazu geeignet und ausgebildet, das Kolbenelement mittels der Vorspanneinrichtung selbsttätig wieder in die arretierte Stellung zu überführen, wenn an dem Kolbenelement keine Zugspannung mehr anliegt bzw. wenn der Seilzug nicht mehr gezogen wird. Die Vorspanneinrichtung ist insbesondere dazu geeignet und ausgebildet, das Kolbenelement aus der Lösestellung in die arretierte Stellung zu überführen, wenn das Kolbenelement nicht mehr aktiv in der Lösestellung gehalten wird.

In einer vorteilhaften Ausgestaltung umfasst das Riegelelement wenigstens eine Kugel oder ist als wenigstens eine solche ausgebildet. Mit einer solchen Kugel kann besonders unaufwendig und ohne zusätzliche Federn oder dergleichen erreicht werden, dass die Verrieglung aufgehoben wird, wenn das Kolbenelement in die Lösestellung gezogen wird. Besonders bevorzugt ist eine Mehrzahl von Riegelelementen und insbesondere von Kugeln vorgesehen. Beispielsweise sind zwei oder drei oder vier oder mehr Riegelelemente vorgesehen.

Das Riegelelement kann auch wenigstens einen Stift und/oder wenigstens eine Klinke oder dergleichen umfassen. Möglich sind auch andere geeignete Ausgestaltungen des Riegelelements. Es ist möglich, dass dem Riegelelement wenigstens eine Vorspanneinrichtung zugeordnet ist, welches das Riegelelement aus dem zweiten Stützelement herausbewegt, wenn das Keilelement in der Lösestellung steht.

Innerhalb des zweiten Stützelements ist vorzugsweise wenigstens eine Kraftspeichereinrichtung angeordnet. Insbesondere umfasst die Fahrradkomponente wenigstens eine Kraftspeichereinrichtung. Die Kraftspeichereinrichtung ist insbesondere dazu geeignet und ausgebildet, durch ein Einfahren des ersten Stützelements in das zweite Stützelement wenigstens teilweise aufgeladen zu werden. Die Kraftspeichereinrichtung ist insbesondere dazu geeignet und ausgebildet, durch ein Ausfahren des ersten Stützelements aus dem zweiten Stützelement wenigstens teilweise entladen zu werden, sodass die Sattelstützeinrichtung wenigstens teilweise selbsttätig ausfahrbar ist.

Eine solche Kraftspeichereinrichtung ermöglicht eine sehr komfortable Rückstellung der Sattelstützeinrichtung. Beispielsweise muss nur das Gesäß angehoben und das Bedienteil betätigt werden. Die Kraftspeichereinrichtung ist insbesondere durch das Fahrergewicht aufladbar. Die Kraftspeichereinrichtung ist insbesondere an dem ersten und dem zweiten Stützelement abgestützt. Die Kraftrichtung der Kraftspeichereinrichtung verläuft insbesondere in Richtung einer Längsachse der Stützelemente. Es ist möglich, dass eine Kraft zum Bewegen des Sattels der Kraftspeichereinrichtung einstellbar ist. Die Kraftspeichereinrichtung umfasst insbesondere wenigstens eine Feder und/oder wenigstens eine Gasfeder. Insbesondere stellt die Kraftspeichereinrichtung auch den Seilzug wieder zurück und/oder spannt diesen vor.

Besonders bevorzugt ist die Kraftspeichereinrichtung derart ausgebildet, dass eine Ausfahrgeschwindigkeit der Sattelstützeinrichtung eine vorbestimmte Maximalgeschwindigkeit nicht überschreitet. Insbesondere wird dazu wenigstens eine Feder und/oder Gasfeder mit einer definierten Federkraft eingesetzt. Eine solche Ausgestaltung hat den Vorteil, dass eine zu hohe Geschwindigkeit oder gar ein ruckartiges Ausfahren des zweiten Stützelements zuverlässig vermieden wird. So kann z. B. auf eine aufwendige und gewichtserhöhende Dämpfereinrichtung verzichtet werden. Der Einsatz einer Dämpfereinrichtung ist aber möglich. In einfachen Ausgestaltungen kann ein Reibelement bei einem längeren Hub eingesetzt werden.

Vorzugsweise ist zwischen den beiden Stützelementen wenigstens ein Reibelement angeordnet. Vorzugsweise umfasst das Reibelement wenigstens eine Dichtung und insbesondere wenigstens einen Dichtungsring und/oder wenigstens einen O-Ring oder dergleichen. Ein solches Reibelement hat den Vorteil, dass die Geschwindigkeit beim Ausfahren der Sattelstützeinrichtung abgebremst werden kann. In allen Ausgestaltungen ist es bevorzugt, wenigstens eine Enddämpfung an der Fahrradkomponente zur Verfügung zu stellen, um in wenigstens einer Endstellung oder vorzugsweise an beiden Endstellungen oder Positionen eine Enddämpfung zu bewirken. Eine solche Enddämpfung kann insbesondere hubabhängig wirken und z.B. auf den letzten 10 mm oder insbesondere 5 mm oder 2 mm des Hubes wirken.

Das erste Stützelement umfasst vorzugsweise wenigstens zwei rohrartige und in ein Verbindungsbereich fest miteinander verbundene Stützabschnitte. Durch einen solchen Aufbau des ersten Stützelements kann der Herstellungsaufwand erheblich reduziert werden. Beispielsweise können dadurch besonders einfach die Verriegelungseinrichtung und/oder die Betätigungseinrichtung integriert werden. Die beiden Stützabschnitte sind vorzugsweise miteinander verklebt. Die beiden Stützabschnitte können auch miteinander verpresst und/oder verschweißt sein. Möglich sind auch andere geeignete kraftschlüssige und/oder formschlüssige und/oder stoffschlüssige Verbindungsarten. Bevorzugt ist der Einsatz leichter Werkstoffe wie Leichtmetall. Besonders bevorzugt werden faserverstärkte Kunststoffe wie Carbonmaterialien eingesetzt.

In den Verbindungsbereich ist vorzugsweise wenigstens eine Außenkontur des ersten Stützelements passgenau zu wenigstens einer Innenkontur des zweiten Stützelements ausgebildet. Das hat den Vorteil, dass auch im Verbindungsbereich eine leichtgängige Führung erreicht wird. Die Außenkontur und die Innenkontur sind insbesondere so ausgebildet, dass das zweite Stützelement auf dem ersten Stützelement geführt ist.

Vorzugsweise sind die Stützabschnitte wenigstens in dem Verbindungsbereich überlappend angeordnet. Insbesondere ist in dem Verbindungsbereich eine koaxiale Anordnung der beiden Stützabschnitte vorgesehen. Möglich ist auch eine Anordnung der Stützabschnitte auf Stoß.

Vorzugsweise weist der eine Stützabschnitt wenigstens abschnittsweise eine größere Wandstärke als der andere Stützabschnitt auf. Insbesondere weist der eine Stützabschnitt wenigstens eine Durchgangsöffnung für das Riegelelement auf. Insbesondere weist der andere Stützabschnitt keine Durchgangsöffnung für das Riegelelement auf. Die beiden Stützabschnitte bieten eine unaufwendige Möglichkeit, unterschiedliche Wandstärken zu realisieren. Dadurch wird eine sehr stabile und zugleich besonders leichtgewichtige Ausgestaltung erreicht.

In einer vorteilhaften Ausgestaltung besteht der eine Stützabschnitt wenigstens zu einem erheblichen Teil aus einem Faserverbundmaterial. Vorzugsweise besteht der andere Stützabschnitt wenigstens zu einem erheblichen Teil aus einem metallischen Leichtbauwerkstoff. Der Leichtbauwerkstoff ist insbesondere ein Aluminiumwerkstoff und zum Beispiel eine Aluminiumlegierung. Durch eine solche Mischung von Werkstoffen wird für jeden Stützabschnitt und dessen jeweilige Aufgabe ein optimales Gewicht bei einer besonders hohen Stabilität erreicht. Möglich sind auch magnesiumhaltige Leichtbauwerkstoffe oder andere metallische Leichtbauwerkstoffe.

Möglich und bevorzugt ist auch, dass beide Stützabschnitte wenigstens zu einem erheblichen Teil aus einem metallischen Leichtbauwerkstoff gefertigt sind. Das bietet eine besonders kostenoptimierte und zugleich sehr zuverlässige Sattelstütze. Es können auch beide Stützabschnitte wenigstens zu einem erheblichen Teil aus einem Faserverbundmaterial gefertigt sein.

Das erste Stützelement kann auch durch ein einzelnes bzw. durchgehendes rohrartiges Bauteil bereitgestellt werden. Eine solche Ausgestaltung bietet die Vorteile der erfindungsgemäßen Fahrradkomponente zusammen mit einer besonderen Kostenoptimierung. Das Bauteil ist dabei insbesondere aus einem Faserverbundmaterial oder aus einem metallischen Leichtbauwerkstoff gefertigt.

Durch Auswahl geeigneter und leichter Materialien für das erste Stützelement (Leichtmetall, Faserverbundwerkstoff, Carbon) und das zweite Stützelement kann ein geringes Gesamtgewicht bei hoher Stabilität erreicht werden. Bei Verschleiß der Riegelelemente und bei Verschleiß der einzelnen Bauteile können diese einfach getauscht werden.

In allen Ausgestaltungen ist der Austausch einzelner Komponenten einfach und werkzeuglos möglich. Dadurch kann die Fahrradkomponente auch bei Bedarf oder regelmäßig gewartet werden. Es ist besonders bevorzugt kein Werkzeug und insbesondere kein Spezialwerkzeug nötig. Die Riegelelemente bestehen vorzugsweise aus einem belastbaren Werkstoff und insbesondere aus einem belastbareren und verschleißfesteren Werkstoff als das erste und/oder das zweite Stützelement. Dadurch kann Wartungsaufwand eingespart werden. Die Riegelelemente können gehärtet sein und/oder wenigstens eine Beschichtung aufweisen, um die Oberfläche z. B. zu härten.

Insbesondere ist in wenigstens einem Stützabschnitt, vorzugsweise in den Stützabschnitt mit der größeren Wandstärke, das Kolbenelement geführt. In dem Stützabschnitt mit der größeren Wandstärke ist vorzugsweise die Vorspanneinrichtung aufgenommen. Insbesondere stellt der eine Stützabschnitt eine Linearführung für das Kolbenelement zur Verfügung. Bevorzugt ist auch, dass die Kraftspeichereinrichtung unmittelbar oder mittelbar auf dem einen Stützabschnitt abgestützt ist.

In allen Ausgestaltungen ist es bevorzugt, dass ein Hub der Sattelstützeinrichtung zwischen 15 mm und 60 mm und insbesondere zwischen 20 mm und 50 mm beträgt. Der maximale Hub kann auch 40 mm oder 30 mm betragen. Besonders bevorzugt ist ein Hub zwischen 30 mm und 50 mm vorgesehen. Möglich ist auch ein kürzerer oder längerer maximaler Hub. Denkbar und bevorzugt ist auch ein Hub von bis zu 80 mm oder bis zu 100 mm. Der Hub bezieht sich insbesondere auf eine Bewegung des zweiten Stützelements gegenüber dem ersten Stützelement.

Eine solche Ausgestaltung hat sich als besonders vorteilhaft zur Anpassung der Sitzposition hinsichtlich der aerodynamischen Eigenschaften eines Fahrrads inklusive des sich darauf befindenden Fahrers erwiesen. So kann beispielsweise eine Verringerung der Sitzhöhe um einen Millimeter aufgrund des reduzierten Windwiderstands die zum Fahren benötigte Leistung um bis zu 1 W oder bei hohen Fahrgeschwindigkeiten noch mehr reduzieren. Daher ist es in vielen Fahrsituationen und insbesondere bei Wettkämpfen oder auch bei E-Bikes zur Verbesserung der Reichweite von großem Vorteil, die Sattelhöhe abzusenken. Dabei soll jedoch nur eine geringe Absenkung erfolgen, damit die ergonomisch günstige Sitzposition erhalten bleibt. Die erfindungsgemäße Fahrradkomponente eignet sich dazu besonders gut. Der zuvor beschriebene maximale Hub ermöglicht daher eine erhebliche Verbesserung der aerodynamischen Eigenschaften und somit der Fahrleistung des Fahrers bzw. des E-Bike-Antriebs.

Die Sicherheit wird erhöht. Beispielsweise kann der Benutzer eines E-Bikes an einer Ampel oder bei einem Halt die Sattelstützeinrichtung absenken, um sich besser und sicherer mit dem Fuß abstützen zu können.

Insbesondere ist die Sattelstützeinrichtung nur zwischen zwei Stellungen verstellbar. Die Stellungen sind insbesondere Endstellungen. Insbesondere sind keine Zwischenstellungen vorgesehen. Das bietet ein zügiges und komfortables Einstellen einer Sitzposition für einen reduzierten Windwiderstand.

Die Erfindung stellt eine sehr einfache und zuverlässige Möglichkeit der Höhenverstellung zur Verfügung.

Insbesondere ist für jede vorgesehene Stellung jeweils wenigstens eine Durchtrittsöffnung im ersten Stützelement und jeweils wenigstens eine Ausnehmung im zweiten Stützelement angeordnet. Insbesondere sind beide Stellungen arretierbar.

Es kann auch vorgesehen sein, dass zwischen den zwei Stellungen wenigstens eine Zwischenstellung einstellbar ist. Insbesondere ist die Verriegelungseinrichtung dazu geeignet und ausgebildet, bei Erreichen einer der beiden Stellungen und/oder einer Zwischenstellung automatisch wieder in eine arretierte Stellung überzugehen und die Position zu verriegeln. Dazu kann eine Betätigung und/oder ein Loslassen der Betätigungseinrichtung nötig sein.

In einer Ausgestaltung umfasst die Fahrradkomponente wenigstens eine hydraulische Dämpfereinrichtung zum Dämpfen der Teleskopierbewegung. Insbesondere ist ein Ausfahren der Sattelstützeinrichtung dämpfbar. Es kann auch ein Einfahren dämpfbar sein. Das bietet ein besonders komfortables Einstellen der Sattelstützeinrichtung, da ein ruckartiges Ausfahren vermieden wird, wenn die Arretierung gelöst wird.

Die Dämpfereinrichtung umfasst vorzugsweise wenigstens zwei Dämpferkammern, zwischen denen ein Dämpferfluid über wenigstens eine Ventileinrichtung strömen kann. Insbesondere ist mit der Ventileinrichtung eine Strömung des Dämpferfluids zwischen den Dämpferkammern gezielt beeinflussbar. Die Dämpfung kann fix oder einstellbar sein.

Das Kolbenelement stellt vorzugsweise wenigstens einen Teil der Ventileinrichtung der Dämpfereinrichtung bereit. Insbesondere ist das Kolbenelement als ein Ventilkolben der Ventileinrichtung ausgebildet. Insbesondere ist das Kolbenelement dazu geeignet und ausgebildet, die Strömung des Dämpferfluids zwischen den Dämpferkammern gezielt zu beeinflussen.

Es ist möglich, dass die Dämpfereinrichtung und die Kraftspeichereinrichtung miteinander kombiniert sind. Beispielsweise kann die Dämpfereinrichtung mit wenigstens einer Feder kombiniert sein. Beispielsweise sind die Kraftspeichereinrichtung und die Dämpfereinrichtung als ein Gasdruckstoßdämpfer ausgebildet.

Das erfindungsgemäße Fahrrad ist wenigstens teilweise mit Muskelkraft betreibbar und umfasst wenigstens eine Fahrradkomponente, wie sie zuvor beschrieben wurde.

Auch das erfindungsgemäße Fahrrad bietet viele Vorteile. Ein Vorteil ist, dass das Fahrrad auch bei unterschiedlichen Fahrsituationen stets eine optimale Sitzposition bietet. Insbesondere verläuft der Seilzug wenigstens abschnittsweise innerhalb eines Sattelrohrs und/oder einer anderen Rahmenstruktur des Fahrrads.

Weitere Vorteile und Merkmale der vorliegenden Erfindung ergeben sich aus der Beschreibung der Ausführungsbeispiele, welche mit Bezug auf die beiliegenden Figuren im Folgenden erläutert werden.

In den Figuren zeigen:
- Fig. 1: eine stark schematische Darstellung eines Fahrrads mit einer erfindungsgemäßen Fahrradkomponente;
- Fig. 2: eine schematische Darstellung einer erfindungsgemäßen Fahrradkomponente in einer Seitenansicht;
- Fig. 3: die Fahrradkomponente in einer geschnittenen Darstellung in einer Seitenansicht;
- Fig. 4: eine Detaildarstellung der Fahrradkomponente der Fig. 3;
- Fig. 5: die Fahrradkomponente in einer geschnittenen Darstellung in einer Ansicht von unten.

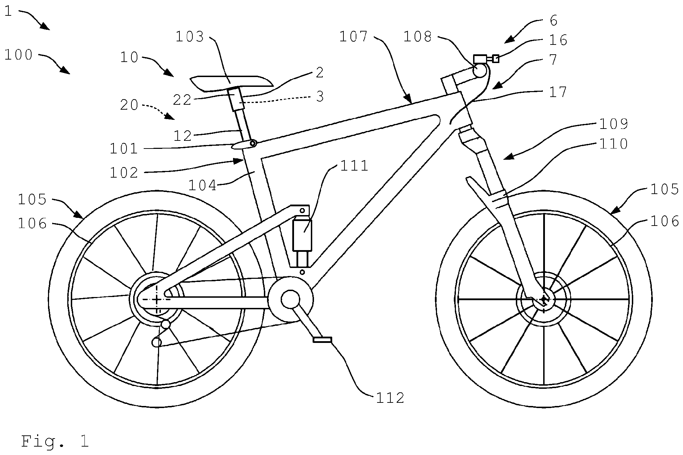

Die Figur 1 zeigt ein als ein Mountainbike ausgebildetes Fahrrad 100 mit einer erfindungsgemäßen Fahrradkomponente 1. Das Fahrrad 100 kann auch als ein teilweise muskelbetriebenes Zweirad und beispielsweise als ein E-Bike ausgebildet sein.

Das Fahrrad 100 weist zwei Laufräder 105 auf, welche hier mit jeweils einer Nabe und einer Felge 106 ausgestattet sind. Das Fahrrad 100 ist vollgefedert ausgeführt. Die Gabel 109 ist dazu als eine Federgabel 110 ausgebildet und der Rahmen 107 verfügt über einen Hinterraddämpfer 111.

Weiterhin umfasst das Fahrrad 100 einen Sattel 103, einen Rahmen 107, einen Lenker 108 sowie weitere Fahrradkomponenten. Als Teil eines Pedalantriebs 112 umfasst das Fahrrad 100 hier eine Kettenschaltung 113. Zudem verfügt das Fahrrad 100 über eine nicht näher gezeigte Bremseinrichtung.

Die Fahrradkomponente 1 umfasst eine verstellbare Sattelstützeinrichtung 2, welche hier in einer als Sattelrohr 104 ausgebildeten Rahmenstruktur 102 aufgenommen ist. Die Sattelstützeinrichtung 2 ist mittels einer Sattelrohrklemme 101 im Sattelrohr 104 befestigt.

Die Sattelstützeinrichtung 2 ist verstellbar ausgebildet, sodass der Sattel 103 in verschiedenen Positionen bzw. Sattelhöhen fixiert werden kann. Dazu umfasst die Sattelstützeinrichtung 2 hier zwei Stützelemente 12, 22, welche teleskopartig auseinandergezogen bzw. ineinandergeschoben werden können.

In der hier gezeigten Darstellung befindet sich die Sattelstützeinrichtung 2 in einer maximal ausgezogenen ersten Stellung 10. Zudem kann eine niedrigere Sattelhöhe eingestellt werden. Dadurch wird die Sattelstützeinrichtung 2 ineinandergeschoben und in eine hier nicht näher dargestellte maximal eingeschobene zweite Stellung 20 gebracht. In einer Ausgestaltung kann die Sattelstützeinrichtung auch in eine oder mehrere Zwischenstellungen verstellt werden.

Zum Arretieren einer eingestellten Sattelposition umfasst die Fahrradkomponente 1 eine hier nicht sichtbar im Inneren der Sattelstützeinrichtung 2 angeordnete Verriegelungseinrichtung 3. Zum Lösen bzw. Aktivieren der Arretierung ist hier eine Betätigungseinrichtung 6 mit einem an dem Lenker 108 befestigten Bedienteil 16 vorgesehen.

Die Betätigungseinrichtung 6 umfasst hier eine Seilzugeinrichtung 7 mit einem Seilzug 17. Die Seilzugeinrichtung 7 kann verschiedene Komponenten zur Führung des Seilzugs 17 und beispielsweise Umlenkrollen oder dergleichen umfassen. Der Seilzug 17 verläuft hier von dem Bedienteil 16 in den Rahmen 107 und dort durch das Sattelrohr 104 bis in die Sattelstützeinrichtung 2 zu der Verriegelungseinrichtung 3.

Beispielsweise wird der Seilzug 17 mit dem Bedienteil 16 gespannt, um die Verriegelungseinrichtung 3 zu lösen. Dann kann der Sattel entweder mit dem Gesäß tiefer gedrückt werden oder durch ein Anheben des Gesäßes mit Unterstützung einer hier nicht gezeigten Kraftspeichereinrichtung 9 nach oben bewegt werden. Die Sattelstützeinrichtung 2 verrastet dann in der jeweiligen Stellung 10, 20. Möglich ist auch, dass eine stufenlose Verstellung vorgesehen ist, sodass z. B. beim Loslassen des Bedienteils 16 der Sattel 103 in einer bestimmten Stellung verbleibt.

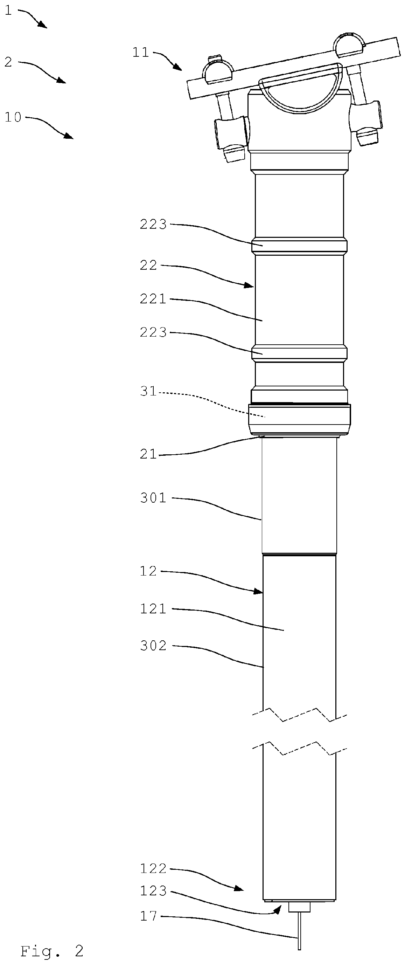

Die Figuren 2 bis 5 zeigen eine erfindungsgemäße Fahrradkomponente 1 in verschiedenen Darstellungen. Die Fahrradkomponente 1 wird nachfolgend mit Bezug zu den Figuren 2 bis 5 näher beschrieben.

Die Fahrradkomponente 1 umfasst eine Sattelstützeinrichtung 2 mit einem ersten bzw. unteren Stützelement 12 und einem zweiten bzw. oberen Stützelement 22. Die beiden Stützelemente 12, 22 sind teleskopierbar.

Das obere Stützelement 22 ist hier mit einer Sattelaufnahme 11 ausgestattet, über welche ein Sattel an der Sattelstützeinrichtung 2 montiert werden kann.

Das erste Stützelement 22 ist mit der Rahmenstruktur des Fahrrades fest daran befestigbar.

An dem der Sattelaufnahme 11 gegenüberliegenden Ende des oberen Stützelements 22 ist eine Dichtung 31 bzw. ein O-Ring angeordnet. Zur Aufnahme der Dichtung 31 weist das obere Stützelement 22 einen Kragen auf.

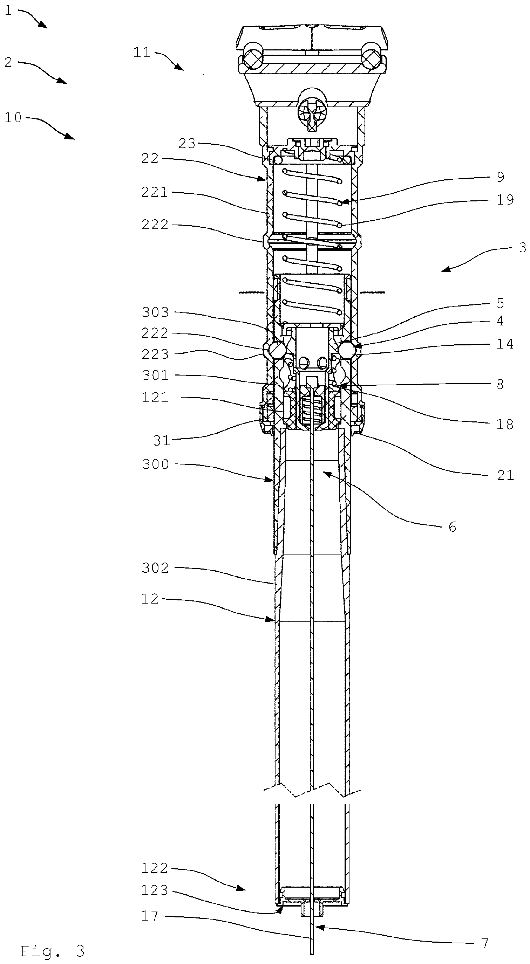

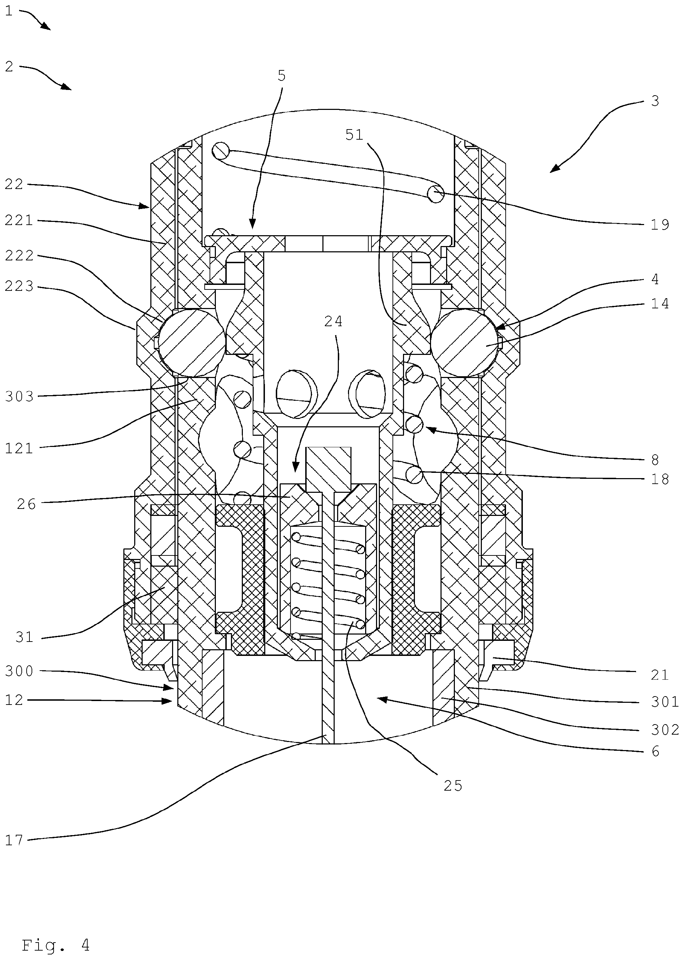

An dem der Sattelaufnahme 11 gegenüberliegenden Ende des Stützelements 22 ist hier ein Schmutzabweiser 21 angeordnet. Dadurch werden Verunreinigungen beim Eintauchen abgestreift. In den Figuren 3 und 4 sind die innenliegenden Komponenten der Sattelstützeinrichtung 2 besonders gut zu erkennen. Die Verriegelungseinrichtung 3 ist hier im Wesentlichen innerhalb des ersten Stützelements 12 angeordnet. Die Verriegelungseinrichtung 3 umfasst hier eine Mehrzahl von Riegelelementen 4, von denen hier nur zwei zu erkennen sind. Die Riegelelemente 4 sind hier als Kugeln 14 ausgebildet. Dabei verläuft ein jeweiliges Riegelelement 4 durch eine Wandung 121 des ersten Stützelements 12. Dazu weist die Wandung 121 eine Durchgangsöffnung 303 auf. Das Riegelelement 4 erstreckt sich weiter in einen Teil einer Wandung 221 des zweiten Stützelements 22. Dort ist eine Ausnehmung 222 für das Riegelelement 4 eingearbeitet. Im Bereich der Ausnehmung 222 ist die Wandung 221 mit einem nach außen weisenden Vorsprung 223 ausgestattet. Die Ausnehmung 122 ist hier umlaufend bzw. ringartig ausgebildet. Möglich ist aber auch eine Ausgestaltung, bei welcher für jedes der Riegelelemente 4 eine entsprechende Ausnehmung 202 20 vorgesehen ist.

Die Riegelelemente 4 werden hier von einem Kolbenelement 5 bzw. von einem Konus 51 des Kolbenelements 5 in die Ausnehmung 222 eingedrückt. In dieser Stellung verhindern die Riegelelemente 4, dass sich das zweite bzw. obere Stützelement 22 weiter absenken kann. Die Sattelhöhe bzw. die Position der beiden Stützelemente 12, 22 zueinander ist somit arretiert. Das Kolbenelement 5 und die Riegelelemente 4 befinden sich in einer verriegelten bzw. arretierten Stellung. Hier ist die obere Stellung 10 der Fahrradkomponente 1 bzw. der Sattelstütze bzw. Sattelstützeinrichtung 2 dargestellt. Die Riegelelemente 4 sind in den unteren Ausnehmungen 222 des zweiten Stützelementes 22 verriegelt.

Um die Verriegelungseinrichtung 3 zu lösen und die Sattelstützeinrichtung 2 einzufahren, wird das Kolbenelement 5 hier in Richtung der Längsachse der Stützelemente 12, 22 nach unten gezogen. Dann wird das Kolbenelement 5 in eine Lösestellung überführt. In der Lösestellung kann durch einen entsprechenden Druck auf den Sattel, beispielsweise mit dem Gesäß, die Sattelhöhe verringert werden.

Das Kolbenelement 5 ist hier konisch ausgebildet, sodass es zum oberen Ende hin schmaler wird. Wird das Kolbenelement 5 nach unten bewegt, drückt es die Riegelelemente 4 nicht mehr (über den Konus 51) in die Ausnehmung 222. So kann sich das obere Stützelement 22 über das untere Stützelement 12 schieben.

Um die Sattelhöhe in der eingefahrenen, niedrigeren Stellung 20 zu arretieren, umfasst die Verriegelungseinrichtung 3 hier eine zusätzliche, weiter oben liegende Ausnehmung 222. Dort können die Riegelelemente 4 durch das Kolbenelement 5 eingedrückt werden, sodass die Sattelstützeinrichtung 2 in dieser Stellung arretiert wird.

Die Fahrradkomponente 1 umfasst hier eine als Feder 19 ausgebildete Kraftspeichereinrichtung 9, welche beim Einfahren der Sattelstützeinrichtung 2 vorgespannt wird. Dazu ist die Feder 19 als Druckfeder ausgelegt. Wenn die Sattelstützeinrichtung 2 in der unteren Stellung 20 arretiert ist und das Kolbenelement 5 in die Lösestellung überführt wird, bewegt sich das obere Stützelement 22 zusammen mit dem Sattel automatisch durch die Kraft der vorgespannten Feder 19 nach oben.

Um das Kolbenelement 5 zuverlässig in der arretierten Stellung zu halten, ist die Verriegelungseinrichtung 3 hier mit einer Vorspanneinrichtung 8 ausgestattet. Die Verspanneinrichtung 8 umfasst hier eine Feder 18, welche das Kolbenelement 5 automatisch in die arretierte Stellung drückt.

Das Kolbenelement 5 wird hier mit einer Betätigungseinrichtung 6 mit einer Seilzugeinrichtung 7 zwischen der Lösestellung und der arretierten Stellung bewegt. Zum Lösen der Arretierung wird das Kolbenelement 5 mit einem Seilzug 17 der Seilzugeinrichtung 7 nach unten gezogen. Solange der Seilzug 17 unter Zug steht, verbleibt das Kolbenelement 5 in der Lösestellung und die Riegelelemente 4 werden nicht in die Ausnehmung 222 gedrückt. Wird der Seilzug 17 entspannt, drückt die Vorspanneinrichtung 8 die Kolbeneinheit 5 wieder in die arretierte Stellung.

Zum Betätigen der Seilzugeinrichtung 7 ist beispielsweise ein Bedienteil 16 wie mit Bezug zu der Figur 1 beschrieben vorgesehen.

Der Seilzug 17 verläuft hier durch das untere Stützelement 12 und verlässt dieses an einem Ende 122, welches in dem Sattelrohr 104 des Fahrrads 100 aufnehmbar ist. Der Seilzug 17 tritt an einer axialen Stirnseite 123 aus dem Stützelement aus.

Das erste Stützelement 12 ist hier aus zwei rohrartigen und in einem Verbindungsbereich 300 miteinander verbundenen Stützabschnitten 301, 302 zusammengesetzt. Die Stützabschnitte 301, 302 sind in dem Verbindungsbereich 300 überlappend angeordnet. Der im betriebsgemäßen Zustand obere Stützabschnitt 301 hat hier eine größere Wandstärke als der untere Stützabschnitt 302. In dem oberen Stützabschnitt 301 befindet sich hier die Durchgangsöffnung 303 für die Riegelelemente 4. Zudem ist in dem oberen Stützabschnitt 301 das Kolbenelement 5 geführt.

Das erste Stützelement 12 weist hier eine Außenkontur 120 auf, welche auf eine Innenkontur 220 des zweiten Stützelements abgestimmt ist. Dabei wird die Außenkontur 120 des ersten Stützelements 12 hier durch die beiden Stützabschnitte 301 und 302 bereitgestellt. So kann das obere Stützelement 22 leicht und ohne zu verkanten über den Verbindungsbereich 300 geschoben werden.

Im Bereich des oberen Endes des zweiten Stützelementes 22 ist eine Endlagendämpfung 23 vorgesehen. Auch am unteren Ende kann eine Endlagendämpfung vorgesehen sein.

Um in allen Stellungen der Betätigungseinrichtung dem Benutzer eine definierte Funktionsweise zu vermitteln, ist der Seilzug 17 mit einem Seilstraffer 24 gekoppelt. Dadurch erhält der Benutzer bei Berührung oder Bewegung der Betätigungseinrichtung jederzeit ein definiertes haptisches Feedback.

Der Seilstraffer 24 umfasst eine Vorspanneinheit 25 und ein Gleitelement 26, welches innerhalb des Kolbenelementes axial geführt wird. Das Gleitelement wird über die Vorspanneinheit in einen vorgespannten Zustand gedrückt und hält das Seil immer straff.

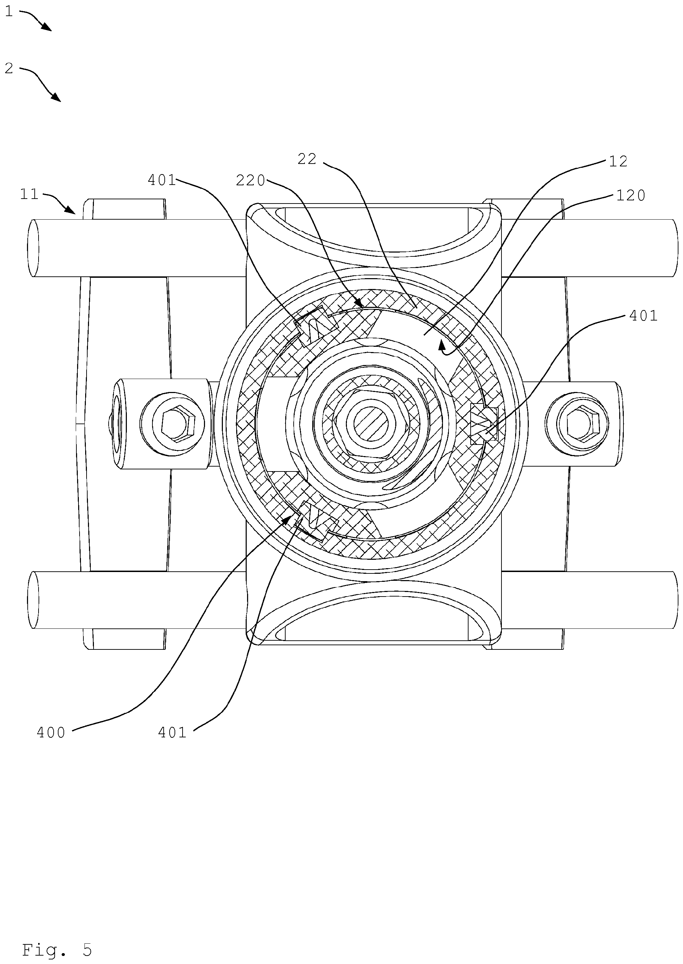

In der Figur 5 ist besonders gut zu erkennen, dass die beiden Stützelemente 12, 22 eine im Wesentlichen runde Außenkontur 120 bzw. Innenkontur 220 aufweisen. Um ein unerwünschtes Verdrehen des Sattels zu verhindern, ist hier eine Verdrehsicherung 400 mit drei Führungselementen 401 vorgesehen. Die Führungselemente 401 sind hier zwischen den beiden Stützelementen 12, 22 angeordnet. Dadurch sind die beiden Stützelemente 12, 22 drehfest miteinander verbunden.

Die hier gezeigte Sattelstützeinrichtung 2 kann auch eine Dämpfereinrichtung zum Dämpfen der Teleskopierbewegung umfassen. Beispielsweise ist dann das Kolbenelement 5 als ein Ventilkolben ausgebildet, welcher eine Strömung eines Dämpferfluids beeinflusst.

### Bezugszeichenliste:

| | | | |
|---|---|---|---|
| 1 | Fahrradkomponente | 102 | Rahmenstruktur |
| 2 | Sattelstützeinrichtung | 103 | Sattel |
| 3 | Verriegelungseinrichtung | 104 | Sattelrohr |
| 4 | Riegelelement | 105 | Laufrad |
| 5 | Kolbenelement | 106 | Felge |
| 6 | Betätigungseinrichtung | 107 | Rahmen |
| 7 | Seilzugeinrichtung | 108 | Lenker |
| 8 | Vorspanneinrichtung | 109 | Gabel |
| 9 | Kraftspeichereinrichtung | 110 | Federgabel |
| 10 | Stellung | 111 | Dämpfer |
| 11 | Sattelaufnahme | 112 | Pedalantrieb |
| 12 | erstes Stützelement | 113 | Kettenschaltung |
| 14 | Kugel | 120 | Außenkontur |
| 16 | Bedienteil | 121 | Wandung |
| 17 | Seilzug | 122 | Ende |
| 18 | Feder | 123 | Stirnseite |
| 19 | Feder | 220 | Innenkontur |
| 20 | Stellung | 221 | Wandung |
| 21 | Schmutzabweiser | 222 | Ausnehmung |
| 22 | zweites Stützelement | 223 | Vorsprung |
| 23 | Endlagendämpfer | 300 | Verbindungsbereich |
| 24 | Seilstraffer | 301 | Stützabschnitt |
| 25 | Vorspanneinheit | 302 | Stützabschnitt |
| 26 | Gleitelement | 303 | Durchgangsöffnung |
| 31 | Dichtung | 400 | Verdrehsicherung |
| 100 | Fahrrad | 401 | Führungselement |
| 101 | Sattelrohrklemme | | |

## Patentansprüche

1. Fahrradkomponente (1) für ein wenigstens teilweise mit Muskelkraft betriebenes Fahrrad (100), umfassend eine zwischen wenigstens zwei Stellungen (10, 20) teleskopartig verstellbare Sattelstützeinrichtung (2) zum Anpassen einer Sattelhöhe und wenigstens eine Verriegelungseinrichtung (3) zum Arretieren der Sattelstützeinrichtung (2) in wenigstens einer der Stellungen (10, 20), wobei die Sattelstützeinrichtung (2) wenigstens zwei relativ zueinander bewegbare Stützelemente (12, 22) umfasst, nämlich ein erstes Stützelement (12) und ein zweites Stützelement (22), wobei das zweite Stützelement (22) zur Aufnahme eines Sattels (103) dient, und wobei das erste Stützelement (12) an einer Rahmenstruktur des Fahrrades fest befestigbar ist,
**dadurch gekennzeichnet,**
**dass** das erste Stützelement (12) wenigstens abschnittsweise innerhalb des zweiten Stützelements (22) angeordnet ist und dass zum Teleskopieren der Sattelstützeinrichtung (2) das zweite Stützelement (22) wenigstens abschnittsweise über das erste Stützelement (12) bewegbar ist und dass das zweite Stützelement (22) einwandig ausgebildet ist und dass die Verriegelungseinrichtung (3) wenigstens teilweise innerhalb des ersten Stützelements (12) angeordnet ist und wenigstens ein Riegelelement (4) umfasst, welches sich im arretierten Zustand durch wenigstens eine Wandung (121) des ersten Stützelements (12) hindurch in das zweite Stützelement (22) erstreckt.

2. Fahrradkomponente (1) nach dem vorhergehenden Anspruch, wobei das Riegelelement (4) wenigstens eine Kugel (14) umfasst oder als eine solche ausgebildet ist.

3. Fahrradkomponente (1) nach dem vorhergehenden Anspruch, wobei sich das Riegelelement (4) im arretierten Zustand nur in einen Teil einer Wandung (221) des zweiten Stützelements (22) erstreckt.

4. Fahrradkomponente (1) nach einem der beiden vorhergehenden Ansprüche, wobei die Verriegelungseinrichtung (3) dazu geeignet und ausgebildet ist, das Riegelelement (4) mittels wenigstens eines Kolbenelements (5) wenigstens teilweise in wenigstens eine Ausnehmung (222) des zweiten Stützelements zu drücken und wobei insbesondere das Kolbenelement (5) in Richtung der Längsachse des ersten Stützelements (12) in wenigstens eine Lösestellung bewegbar ist und wobei das Kolbenelement (5) in der Lösestellung das Riegelelement (4) nicht in das zweite Stützelement (22) drückt.

5. Fahrradkomponente (1) nach dem vorhergehenden Anspruch, wobei das Kolbenelement (5) zum Einnehmen der Lösestellung in Richtung eines von dem zweiten Stützelement abgewandten Endes (122) des ersten Stützelements (12) insbesondere durch ein Ziehen bewegbar ist.

6. Fahrradkomponente (1) nach einem der vorhergehenden Ansprüche, umfassend wenigstens eine Betätigungseinrichtung (6) zum Lösen und/oder Aktivieren der Verriegelungseinrichtung (3) und wobei die Betätigungseinrichtung (6) wenigstens teilweise mechanisch ausgebildet ist und wenigstens eine Seilzugeinrichtung (7) mit wenigstens einem Seilzug (17) umfasst.

7. Fahrradkomponente (1) nach dem vorhergehenden Anspruch, wobei der Seilzug (17) aus einer axialen Stirnseite (123) des ersten Stützelements (12) austritt.

8. Fahrradkomponente (1) nach einem der beiden vorhergehenden Ansprüche, wobei der Seilzug mit einem Seilstraffer gekoppelt ist.

9. Fahrradkomponente (1) nach einem der vorhergehenden Ansprüche, wobei innerhalb des zweiten Stützelements (22) wenigstens eine Kraftspeichereinrichtung (9) angeordnet ist und wobei die Kraftspeichereinrichtung (9) dazu geeignet und ausgebildet ist, durch ein Einfahren des ersten Stützelements (12) in das zweite Stützelement (22) wenigstens teilweise aufgeladen zu werden und durch ein Ausfahren des ersten Stützelements (12) aus dem zweiten Stützelement (22) wenigstens teilweise entladen zu werden, sodass die Sattelstützeinrichtung (2) wenigstens teilweise selbsttätig ausfahrbar ist.

10. Fahrradkomponente (1) nach einem der vorhergehenden Ansprüche, wobei das erste Stützelement (12) und/oder das zweite Stützelement (22) wenigstens zu einem erheblichen Teil aus einem Faserverbundmaterial besteht.

11. Fahrradkomponente (1) nach einem der vorhergehenden Ansprüche, wobei das erste Stützelement (12) wenigstens zwei rohrartige und in einem Verbindungsbereich (300) fest miteinander verbundene und vorzugsweise verklebte Stützabschnitte (301, 302) umfasst.

12. Fahrradkomponente (1) nach dem vorhergehenden Anspruch, wobei der eine Stützabschnitt (301) wenigstens abschnittsweise eine größere Wandstärke als der andere Stützabschnitt (302) und wenigstens eine Durchgangsöffnung (303) für das Riegelelement (4) aufweist.

13. Fahrradkomponente (1) nach einem der beiden vorhergehenden Ansprüche, wobei der eine Stützabschnitt (301) wenigstens zu einem erheblichen Teil aus einem Faserverbundmaterial besteht und/oder wobei der andere Stützabschnitt (302) wenigstens zu einem erheblichen Teil aus einem metallischen Leichtbauwerkstoff und insbesondere aus Aluminiumwerkstoff besteht.

14. Fahrradkomponente (1) nach einem der vorhergehenden Ansprüche, wobei ein maximaler Hub der Sattelstützeinrichtung (2) 100 mm und vorzugsweise 80 mm beträgt.

15. Fahrrad (100), wenigstens teilweise mit Muskelkraft betreibbar, umfassend wenigstens eine Fahrradkomponente (1) nach einem der vorhergehenden Ansprüche.

## Claims

1. Bicycle component (1) for an at least partially muscle-powered bicycle (100), comprising a seat post device (2) telescopically adjustable between at least two positions (10, 20) for adapting the saddle height, and at least one locking device (3) for locking the seat post device (2) in at least one of the positions (10, 20), wherein the seat post device (2) comprises at least two support members (12, 22) movable relative to one another namely, a first support member (12) and a second support member (22), wherein the second support member (22) serves to receive a saddle (103), and wherein the first support member (12) can be firmly fastened to the frame structure of the bicycle,
**characterized in**
**that** the first support member (12) is disposed inside the second support member (22) at least in sections, and that for telescoping the seat post device (2) the second support member (22) can be moved at least in sections over the first support member (12), and that the second support member (22) is configured single-walled, and that the locking device (3) is at least partially disposed inside the first support member (12) and comprises at least one bolt member (4), which in the locked state extends through at least one wall (121) of the first support member (12) into the second support member (22).

2. The bicycle component (1) according to the preceding claim, wherein the bolt member (4) comprises, or is configured as, at least one sphere (14).

3. The bicycle component (1) according to the preceding claim, wherein in the locked state the bolt member (4) extends only into part of a wall (221) of the second support member (22).

4. The bicycle component (1) according to any of the two preceding claims, wherein the locking device (3) is suitable and configured to urge the bolt member (4) at least partially into at least one recess (222) of the second support member by means of at least one piston member (5), and wherein in particular the piston member (5) is movable in the direction of the longitudinal axis of the first support member (12) to at least one release position, and wherein in the release position, the piston member (5) does not urge the bolt member (4) into the second support member (22).

5. The bicycle component (1) according to the preceding claim, wherein the piston member (5) is movable in particular by pulling, to assume the release position in the direction of the end (122) of the first support member (12) facing away from the second support member.

6. The bicycle component (1) according to any of the preceding claims, comprising at least one actuating device (6) for releasing and/or actuating the locking device (3), and wherein the actuating device (6) is at least partially mechanical and comprises at least one cable control (7) having at least one control cable (17).

7. The bicycle component (1) according to the preceding claim, wherein the control cable (17) exits from an axial front face (123) of the first support member (12).

8. The bicycle component (1) according to any of the two preceding claims, wherein the control cable is coupled with a cable tensioner.

9. The bicycle component (1) according to any of the preceding claims, wherein at least one energy storage device (9) is disposed inside the second support member (22), and wherein the energy storage device (9) is suitable and configured to be at least partially charged by retracting the first support member (12) into the second support member (22) and to be at least partially discharged by extending the first support member (12) out of the second support member (22), so that the seat post device (2) can be extended at least partially automatically.

10. The bicycle component (1) according to any of the preceding claims, wherein the first support member (12) and/or the second support member (22) consist/s at least considerably of a fibrous composite material.

11. The bicycle component (1) according to any of the preceding claims, wherein the first support member (12) comprises at least two tubular support sections (301, 302) fixedly joined and preferably glued to one another, in a connecting area (300).

12. The bicycle component (1) according to the preceding claim, wherein one support section (301) shows at least in sections a greater wall thickness than does the other support section (302), and comprises at least one through hole (303) for the bolt member (4).

13. The bicycle component (1) according to any of the two preceding claims, wherein one support section (301) consists at least considerably of a fibrous composite material, and/or wherein the other support section (302) consists at least considerably of a metallic lightweight material and in particular an aluminum material.

14. The bicycle component (1) according to any of the preceding claims, wherein the seat post device (2) shows a maximum stroke length of 100 mm and preferably 80 mm.

15. Bicycle (100) that is at least partially muscle-powered, comprising at least one bicycle component (1) according to any of the preceding claims.

## Revendications

1. Composant de bicyclette (1) pour une bicyclette (100) entraînée au moins en partie par force musculaire, comprenant un dispositif de support de selle (2) qui est réglable de manière télescopique entre au moins deux positions (10, 20) et destiné à adapter une hauteur de selle, ainsi qu'au moins un dispositif de verrouillage (3) destiné à arrêter le dispositif de support de selle (2) dans au moins l'une des positions (10, 20), dans lequel le dispositif de support de selle (2) comprend au moins deux éléments de support (12, 22) qui sont mobiles l'un par rapport à l'autre, à savoir un premier élément de support (12) et un deuxième élément de support (22), dans lequel le deuxième élément de support (22) sert à recevoir une selle (103), et dans lequel le premier élément de support (12) peut être fixé de manière solide à une structure de cadre de la bicyclette,
**caractérisé par le fait**
**que** le premier élément de support (12) est disposé au moins par sections à l'intérieur du deuxième élément de support (22) et que, pour télescoper le dispositif de support de selle (2), le deuxième élément de support (22) peut être déplacé au moins par sections sur le premier élément de support (12) et que le deuxième élément de support (22) est réalisé à paroi simple et que le dispositif de verrouillage (3) est disposé au moins en partie à l'intérieur du premier élément de support (12) et comprend au moins un élément de verrouillage (4), qui, à l'état arrêté, s'étend à travers au moins une paroi (121) du premier élément de support (12) jusque dans le deuxième élément de support (22).

2. Composant de bicyclette (1) selon la revendication précédente, dans lequel l'élément de verrouillage (4) comprend au moins une bille (14) ou est conçu en tant que telle.

3. Composant de bicyclette (1) selon la revendication précédente, dans lequel, à l'état arrêté, l'élément de verrouillage (4) ne s'étend que dans une partie d'une paroi (221) du deuxième élément de support (22).

4. Composant de bicyclette (1) selon l'une quelconque des deux revendications précédentes, dans lequel le dispositif de verrouillage (3) est adapté et conçu pour pousser l'élément de verrouillage (4) au moins en partie, au moyen d'au moins un élément de piston (5), dans au moins un évidement (222) du deuxième élément de support, et dans lequel en particulier l'élément de piston (5) peut être déplacé en direction de l'axe longitudinal du premier élément de support (12) dans au moins une position de libération et dans lequel, dans la position de libération, l'élément de piston (5) ne pousse pas l'élément de verrouillage (4) dans le deuxième élément de support (22).

5. Composant de bicyclette (1) selon la revendication précédente, dans lequel, pour prendre la position de libération, l'élément de piston (5) peut être déplacé, en particulier par une traction, en direction d'une extrémité (122) du premier élément de support (12) qui est opposée au deuxième élément de support.

6. Composant de bicyclette (1) selon l'une quelconque des revendications précédentes, comprenant au moins un dispositif d'actionnement (6) pour libérer et/ou activer le dispositif de verrouillage (3) et dans lequel le dispositif d'actionnement (6) est réalisé au moins en partie mécaniquement et comprend au moins un dispositif de traction par câble (7) ayant au moins un câble de commande (17).

7. Composant de bicyclette (1) selon la revendication précédente, dans lequel le câble de commande (17) sort d'une face frontale axiale (123) du premier élément de support (12).

8. Composant de bicyclette (1) selon l'une quelconque des deux revendications précédentes, dans lequel le câble de commande est couplé à un tendeur de câble.

9. Composant de bicyclette (1) selon l'une quelconque des revendications précédentes, dans lequel au moins un dispositif de stockage d'énergie (9) est disposé à l'intérieur du deuxième élément de support (22) et dans lequel le dispositif de stockage d'énergie (9) est adapté et conçu pour être chargé au moins en partie par le fait que le premier élément de support (12) entre dans le deuxième élément de support (22) et pour être déchargé au moins en partie par le fait que le premier élément de support (12) sort du deuxième élément de support (22), de sorte que le dispositif de support de selle (2) peut être sorti au moins en partie automatiquement.

10. Composant de bicyclette (1) selon l'une quelconque des revendications précédentes, dans lequel le premier élément de support (12) et/ou le deuxième élément de support (22) est constitué au moins pour une partie importante d'un matériau composite fibreux.

11. Composant de bicyclette (1) selon l'une quelconque des revendications précédentes, dans lequel le premier élément de support (12) comprend au moins deux sections de support tubulaires (301, 302) qui sont reliées solidement l'une à l'autre dans une zone de liaison (300) et sont de préférence collées.

12. Composant de bicyclette (1) selon la revendication précédente, dans lequel l'une (301) des sections de support présente, au moins par sections, une épaisseur de paroi supérieure à celle de l'autre section de support (302) et au moins une ouverture de passage (303) pour l'élément de verrouillage (4).

13. Composant de bicyclette (1) selon l'une quelconque des deux revendications précédentes, dans lequel l'une (301) des sections de support est constituée au moins pour une partie importante d'un matériau composite fibreux et/ou dans lequel l'autre section de support (302) est constituée au moins pour une partie importante d'un matériau de construction métallique léger et en particulier d'un matériau d'aluminium.

14. Composant de bicyclette (1) selon l'une quelconque des revendications précédentes, dans lequel une course maximale du dispositif de support de selle (2) est de 100 mm et de préférence de 80 mm.

15. Bicyclette (100), qui peut être entraînée, au moins en partie, par force musculaire, comprenant au moins un composant de bicyclette (1) selon l'une quelconque des revendications précédentes.
